# EUROPEAN PATENT APPLICATION

(11) **EP 4 328 552 A1**
(43) Date of publication of application: **28.02.2024**
(21) Application number: 22791625.1
(22) Date of filing: 08.04.2022
(51) Int. Cl.: G01J 1/02, G01J 1/06

(54) **ELECTROMAGNETIC WAVE DETECTING DEVICE**

(30) Priority: 22.04.2021 JP 2021072693
(71) Applicant: Kyocera Corporation, Kyoto-shi Kyoto 612-8501 (JP)
(72) Inventor: HOSHINO Koichi, Kyoto-shi, Kyoto 612-8501 (JP); OKADA Hiroki, Kyoto-shi, Kyoto 612-8501 (JP); TAKEUCHI Eri, Kyoto-shi, Kyoto 612-8501 (JP)
(74) Representative: Viering, Jentschura & Partner mbB Patent- und Rechtsanwälte
(86) International application number: PCT/JP2022/017424
(87) International publication number: WO 2022/224851

(57) **Abstract**

An electromagnetic wave detecting apparatus 10 includes a first image forming unit 15, an intermediate layer 22, and a blocking unit 25. The first image forming unit 15 is configured to cause incident electromagnetic waves to form an image. The blocking unit 25 is configured to block propagation of electromagnetic waves to the first image forming unit 15 when the electromagnetic waves are incident on the intermediate layer 22 at angle equal to or greater than a critical angle.

## Description

### CROSS-REFERENCE TO RELATED APPLICATIONS

This application claims priority to Japanese Patent Application No. 2021-072693 filed on April 22, 2021, the entire disclosure of which is incorporated herein by reference.

### TECHNICAL FIELD

The present disclosure relates to an electromagnetic wave detecting apparatus.

### BACKGROUND OF INVENTION

In recent years, apparatuses have been developed which are configured to obtain information about surroundings from a result of detection made by a detector that is capable of detecting electromagnetic waves. For example, an apparatus is known which is configured to measure, using radar, the position of an object in an image picked up by a camera (see, Patent Literature 1).

### CITATION LIST

### PATENT LITERATURE

Patent Literature 1: Japanese Unexamined Patent Application Publication No. 2019-200104

### SUMMARY

In an embodiment of the present disclosure, an electromagnetic wave detecting apparatus includes a radiator, a first optical element, an intermediate layer, and a blocking unit. The radiator is configured to radiate electromagnetic waves into space where an object exists. The first optical element has a first surface configured to separate incident electromagnetic waves into a first part propagating in a first direction and a second part propagating in a second direction. The intermediate layer is configured not to allow passage of electromagnetic waves of the second part incident at an angle equal to or greater than a first critical angle, and configured to allow passage of electromagnetic waves of the second part incident at an angle smaller than the first critical angle. The blocking unit includes an opening allowing electromagnetic waves to pass therethrough, and is configured to partially block incident electromagnetic waves. The blocking unit blocks electromagnetic waves incident on a first intermediate surface at angle equal to or greater than the first critical angle.

### BRIEF DESCRIPTION OF THE DRAWINGS

FIG. 1 is a diagram illustrating a schematic configuration of an electromagnetic wave detecting apparatus according to a first embodiment.
FIG. 2 is a diagram illustrating a schematic configuration of an electromagnetic wave detector according to the first embodiment.
FIG. 3 is a diagram illustrating the schematic configuration of the electromagnetic wave detector in FIG. 2, as viewed from a different side.
FIG. 4 is a diagram schematically illustrating shapes of a blocking unit illustrated in FIG. 2.
FIG. 5 is a diagram illustrating a schematic configuration of a variation of the electromagnetic wave detector according to the first embodiment.
FIG. 6 is a diagram illustrating a schematic configuration of an electromagnetic wave detector according to a second embodiment.

### DESCRIPTION OF EMBODIMENTS

Embodiments of an electromagnetic wave detecting apparatus to which the present invention is applied will now be described with reference to the drawings. Note that configurations of the embodiments are not limited to the present disclosure. For convenience of the illustration, dimensional ratios in the drawings do not necessarily match those in the description.

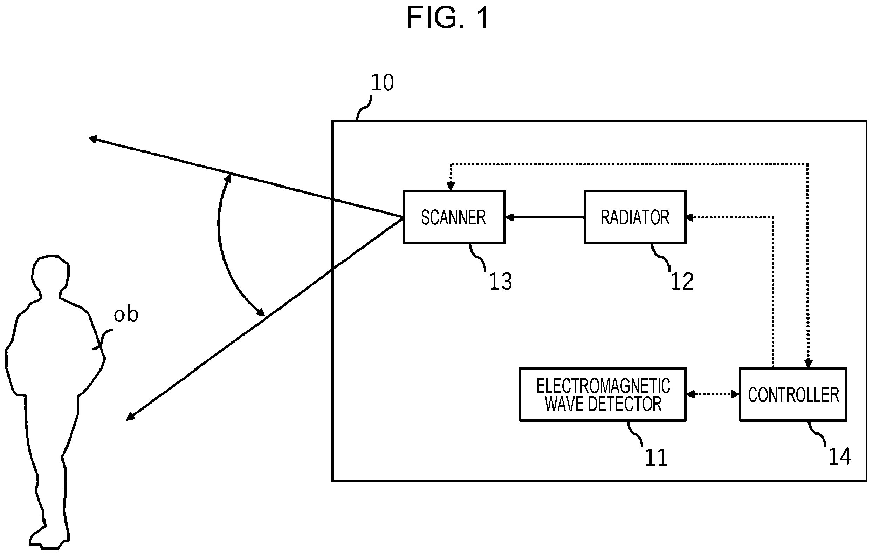

FIG. 1 is a diagram illustrating a schematic configuration of an electromagnetic wave detecting apparatus 10 according to a first embodiment. As illustrated in FIG. 1, the electromagnetic wave detecting apparatus 10 includes an electromagnetic wave detector 11, a radiator 12, a scanner 13, and a controller 14.

In the drawing, broken lines that connect functional blocks each represent the flow of a control signal or communicated information. The broken lines may represent either wired or wireless communication. Solid lines extending from functional blocks each represent a beam of electromagnetic waves.

The electromagnetic wave detector 11 detects, with a passive sensor or an active sensor, electromagnetic waves incident from space where an object ob exists. The electromagnetic wave detector 11 also detects, with the passive sensor or the active sensor, electromagnetic waves radiated by the radiator 12 and reflecting off the object ob. A method for detecting electromagnetic waves incident on the electromagnetic wave detector 11 will be described later below.

The radiator 12 radiates a narrow beam of electromagnetic waves. The radiator 12 may radiate, for example, at least one selected from the group consisting of infrared light, visible light, ultraviolet light, and radio waves. In the present embodiment, the radiator 12 radiates a pulse of infrared light. The radiator 12 may radiate electromagnetic waves toward the object ob directly or indirectly through the scanner 13. The radiator 12 may turn on and off the radiation of electromagnetic waves in accordance with control performed by the controller 14.

The scanner 13 has, for example, a reflection surface that reflects electromagnetic waves. By reflecting electromagnetic waves radiated from the radiator 12 while changing the orientation of the scanner 13, the scanner 13 may change the position at which the object ob is irradiated with electromagnetic waves. With electromagnetic waves radiated from the radiator 12, the scanner 13 may repeatedly scan a predetermined region in the space where the object ob exists. The scanner 13 may be configured in such a way that at least part of a region irradiated with electromagnetic waves radiated from the radiator 12 and reflected is included in the range of detection of electromagnetic waves in the electromagnetic wave detecting apparatus 10. The electromagnetic wave detector 11 thus detects at least part of electromagnetic waves reflecting off the object ob irradiated through the scanner 13. The scanner 13 may reflect electromagnetic waves to change the direction of propagation of the electromagnetic waves, in accordance with control performed by the controller 14. The scanner 13 may include an angular sensor, such as an encoder. The scanner 13 may notify the controller 14 of the angle of the reflection surface detected by the angular sensor, as directional information indicating the direction of reflection of the electromagnetic waves. With this configuration, the controller 14 may calculate the position of radiation of electromagnetic waves on the basis of the directional information acquired from the scanner 13. The controller 14 may calculate the position of irradiation of electromagnetic waves, on the basis of a drive signal sent to the scanner 13 for changing the direction in which the scanner 13 reflects electromagnetic waves.

The controller 14 includes at least one processor and memory. The processor may include at least one of a general-purpose processor configured to read a specific program and execute a specific function, or a dedicated processor dedicated to specific processing. The dedicated processor may include an application specific integrated circuit (ASIC). The processor may include a programmable logic device (PLD). The PLD may include a field-programmable gate array (FPGA). The controller 14 may include at least one of a system-on-a-chip (SoC) or a system in a package (SiP) where one or more processors work together. The controller 14 sends an electromagnetic wave radiation signal to the radiator 12 to cause the radiator 12 to radiate a pulse of electromagnetic waves. The controller 14 sends a control signal to the scanner 13 to change the direction in which the scanner 13 reflects electromagnetic waves. On the basis of the result of the detection of electromagnetic waves made by the electromagnetic wave detector 11, the controller 14 acquires information about surroundings of the electromagnetic wave detector 11. The information about the surroundings includes, for example, image information, distance information, and temperature information.

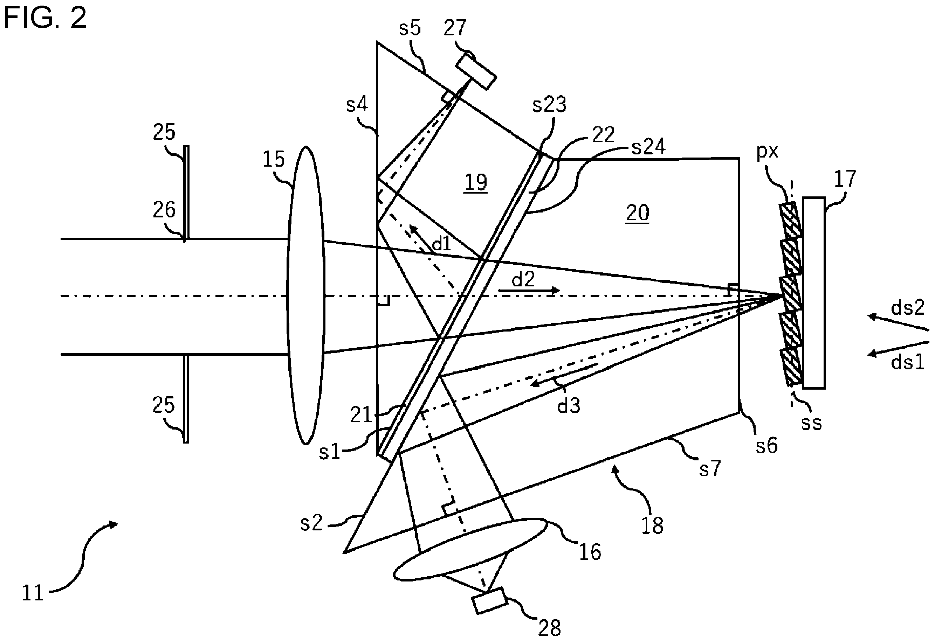

FIG. 2 is a diagram illustrating a schematic configuration of the electromagnetic wave detector 11 according to the first embodiment. FIG. 2 is a diagram as viewed from the right or left side of the axis of propagation of electromagnetic waves incident on the electromagnetic wave detector 11. As illustrated in FIG. 2, the electromagnetic wave detector 11 includes a first image forming unit 15, a second image forming unit 16, a first propagation unit 17, a second propagation unit 18, a blocking unit 25, a first detector 27, and a second detector 28.

The first image forming unit 15 includes, for example, at least one lens or mirror. In the electromagnetic wave detector 11, the first image forming unit 15 allows electromagnetic waves incident from the space where the object ob exists to propagate to a fourth surface s4 of the second propagation unit 18. The first image forming unit 15 causes the incident electromagnetic waves to form an image on the first propagation unit 17 or the first detector 27.

The second image forming unit 16 is disposed in the propagation path of electromagnetic waves propagating from the first propagation unit 17 in a first selection direction ds1. In the present embodiment, the electromagnetic waves propagating in the first selection direction ds1 are reflected off a second surface s2 of a second prism 20 and emitted from a seventh surface s7. The second image forming unit 16 may be disposed with a main surface thereof parallel to the seventh surface s7.

The second image forming unit 16 includes, for example, at least one of a lens or a mirror. The second image forming unit 16 may converge electromagnetic waves formed into an image by the first image forming unit 15 in a reference plane ss of the first propagation unit 17, propagating through the second prism 20, and emitted from the seventh surface s7, so that the converged electromagnetic waves are formed into an image on the second detector 28.

In the present embodiment, the first propagation unit 17 is disposed in the path of electromagnetic waves incident on the second surface s2 of the second propagation unit 18 and emitted from the sixth surface s6. At a predetermined distance from the first image forming unit 15, the first propagation unit 17 may be disposed at or near the image formation position of incident electromagnetic waves.

The first propagation unit 17 has the reference plane ss in which electromagnetic waves passing through the first image forming unit 15 and the second propagation unit 18 are incident. The reference plane ss is defined by a plurality of pixels px arranged along a flat surface. In at least one of a first state or a second state (described below), the pixels px have an effect, such as reflection or transmission, on electromagnetic waves. The first propagation unit 17 may be disposed with the reference plane ss perpendicular to the axis of propagation of electromagnetic waves emitted from the sixth surface s6.

The first propagation unit 17 causes electromagnetic waves incident in the reference plane ss to propagate in a specific direction. In the present embodiment, the first propagation unit 17 includes a reflection surface that reflects electromagnetic waves for each of the pixels px. By changing the orientation of the reflection surface for each of the pixels px, the first propagation unit 17 switches between a first reflection state and a second reflection state for the pixel px. The first propagation unit 17 is capable of switching, for each of the pixels px, between a first state in which incident electromagnetic waves are caused to propagate in the first selection direction ds1 (specific direction) and a second state in which incident electromagnetic waves are caused to propagate in a second selection direction ds2 (another specific direction). In the present embodiment, the first state includes the first reflection state in which electromagnetic waves incident in the reference plane ss are reflected in the first selection direction ds1, and the second state includes the second reflection state in which electromagnetic waves incident in the reference plane ss are reflected in the second selection direction ds2.

In the present embodiment, the first propagation unit 17 may include, for example, a digital micro mirror device (DMD). By driving very small reflection surfaces defining the reference plane ss, the DMD can make the reflection surface of each of the pixels px inclined either at +12° or -12° with respect to the reference plane ss.

The first propagation unit 17 may switch between the first state and the second state for each of the pixels px in accordance with control performed by the controller 14. For example, by bringing some pixels px into the first state while bringing other pixels px into the second state at the same time, the first propagation unit 17 causes electromagnetic waves incident on the pixels px in the first state to propagate in the first selection direction ds1, and causes electromagnetic waves incident on the pixels px in the second state to propagate in the second selection direction ds2.

The second propagation unit 18 is disposed between the first image forming unit 15 and the first propagation unit 17. The second propagation unit 18 includes a first prism 19, the second prism 20, a separator 21, and an intermediate layer 22. The second propagation unit 18 emits electromagnetic waves incident from the first image forming unit 15 and separated by the separator 21 toward the first detector 27 and the first propagation unit 17. The electromagnetic waves propagated in the first selection direction ds1 by the first propagation unit 17 and incident again on the second propagation unit 18 from the sixth surface s6 are reflected off the second surface s2 of the second propagation unit 18 and emitted toward the second detector 28.

The first prism 19 has a first surface s1, the fourth surface s4, and a fifth surface s5. The first prism 19 includes, for example, a triangular prism. The first surface s1, the fourth surface s4, and the fifth surface s5 may intersect each other.

The first prism 19 may be disposed with the fourth surface s4 perpendicular to the optical axis of the first image forming unit 15. The first prism 19 has the first surface s1 in the direction of propagation of electromagnetic waves propagating from the first image forming unit 15, transmitted through or refracted by the fourth surface s4, and propagating inside the first prism 19. The first prism 19 has the fourth surface s4 in a first direction d1 in which electromagnetic waves reflecting off the first surface s1 propagate. The first prism 19 has the fifth surface s5 in the propagation direction in which electromagnetic waves propagating from the first surface s1 in the first direction d1 and reflecting off the fourth surface s4 propagate.

The first surface s1 includes the separator 21. The separator 21 separates electromagnetic waves propagating from the fourth surface s4, and causes the electromagnetic waves to propagate in the first direction d1 and a second direction d2. In the present example, the first direction d1 is a direction in which the electromagnetic waves incident from the fourth surface s4 into the first prism 19 are reflected by the separator 21. The second direction d2 is a direction in which electromagnetic waves incident from the fourth surface s4 into the first prism 19 are transmitted through the separator 21 and propagate. The first surface s1 may be in the shape of, for example, a rectangle with minor and major axes. The first prism 1 may be disposed in such a way that the principal axis of the first image forming unit 15 is inclined at a predetermined angle with respect to the minor axis of the first surface s1, and that the major axis of the first surface s1 is orthogonal to the principal axis of the first image forming unit 15.

Electromagnetic waves propagating from the first image forming unit 15 are incident on the fourth surface s4. The fourth surface s4 allows the electromagnetic waves incident from the first image forming unit 15 to propagate toward the first surface s1. As described below, the fourth surface s4 allows electromagnetic waves propagating from the separator 21 in the first direction d1 to propagate toward the first detector 27. The fourth surface s4 may reflect electromagnetic waves separated by the separator 21 and propagating in the first direction d1, and allow the electromagnetic waves to propagate toward the first detector 27. The electromagnetic waves propagating from the separator 21 in the first direction d1 may be incident on the fourth surface s4 at an angle equal to or greater than the critical angle of the fourth surface s4.

The fifth surface s5 emits the electromagnetic waves propagating from the fourth surface s4 toward the first detector 27.

The second prism 20 has the second surface s2, the sixth surface s6, and the seventh surface s7. The second prism 20 includes, for example, a rectangular prism. The sixth surface s6 and the second surface s2 may intersect the seventh surface s7.

The second prism 20 may be disposed with the second surface s2 parallel to, and opposite, the first surface s1 of the first prism 19. The second prism 20 has the sixth surface s6 in the direction of propagation of electromagnetic waves transmitted through the first surface s1 of the first prism 19, incident from the second surface s2, and propagating inside the second prism 20. The second prism 20 has the seventh surface s7 in the propagation direction of electromagnetic waves incident from the sixth surface s6, propagating in a third direction d3, and reflecting off the second surface s2. The third direction d3 includes the direction of propagation of electromagnetic waves from the pixels px of the first propagation unit 17 in the first state.

The second surface s2 may allow electromagnetic waves propagating from the sixth surface s6 in the third direction d3 to propagate toward the second detector 28.

The second surface s2 may be parallel to the first surface s1. The second surface s2 may be inclined with respect to the reference plane ss of the first propagation unit 17.

The sixth surface s6 may emit electromagnetic waves propagating from the first surface s1 in the second direction d2 toward the reference plane ss of the first propagation unit 17. The sixth surface s6 allows electromagnetic waves reflected in the first selection direction ds1 by the pixels px of the first propagation unit 17 in the first state and incident again on the sixth surface s6 to propagate in the third direction d3. The sixth surface s6 may be parallel to the reference plane ss of the first propagation unit 17. The sixth surface s6 may transmit or refract electromagnetic waves incident again from the reference plane ss and allow the electromagnetic waves to propagate in the third direction d3.

The seventh surface s7 emits electromagnetic waves propagating from the second surface s2 toward the second detector 28. The seventh surface s7 may be disposed at a position opposite the second detector 28. The separator 21 separates electromagnetic waves propagating from the first image forming unit 15 into the first direction d1 and the second direction d2 in accordance with the wavelength.

The separator 21 may be disposed between the first prism 19 and the second prism 20. The separator 21 may be in contact with the first surface s1 of the first prism 19. The separator 21 may be in contact with a first intermediate surface s23 of the intermediate layer 22 described below. For example, the separator 21 adheres to the first surface s1 and includes a visible light reflecting coating, a half mirror, a beam splitter, a dichroic mirror, a cold mirror, a hot mirror, a metasurface, and a deflecting element.

The separator 21 separates electromagnetic waves propagating from the fourth surface s4 and allows the electromagnetic waves to propagate in the first direction d1 and the second direction d2. The separator 21 allows incident electromagnetic waves having a specific wavelength to propagate in the first direction d1 and allows incident electromagnetic waves having another wavelength to propagate in the second direction d2. The separator 21 may reflect incident electromagnetic waves having a specific wavelength in the first direction d1, and transmit or refract incident electromagnetic waves having another wavelength in the second direction d2. For example, "specific wavelength" may be a wavelength that can be detected by the first detector 27, and "another wavelength" may be a wavelength that can be detected by the second detector 28. In the present example, "specific wavelength" includes a visible light wavelength, and "another wavelength" includes an infrared wavelength. In the present embodiment, where the separator 21 is disposed on the first surface s1, the angle of incidence of electromagnetic waves propagating from the first image forming unit 15 onto the separator 21 may be equal to the angle of incidence of electromagnetic waves propagating from the first image forming unit 15 onto the first surface s1. The intermediate layer 22 is defined by the first intermediate surface s23 and a second intermediate surface s24. The intermediate layer 22 may be disposed between the first surface s1 of the first prism 19 and the second surface s2 of the second prism 20. The intermediate layer 22 may be in contact with the first surface s1 of the first prism 19. The intermediate layer 22 may include the first surface s1. The first intermediate surface s23 may be the first surface s1. The intermediate layer 22 may be in contact with the second surface s2 of the second prism 20. The intermediate layer 22 may include the second surface s2. The second intermediate surface s24 may be the second surface s2.

The intermediate layer 22 does not transmit but reflects electromagnetic waves propagating from the first image forming unit 15 and incident on the first intermediate surface s23 at an angle equal to or greater than the critical angle, and transmits electromagnetic waves propagating from the first image forming unit 15 and incident on the first intermediate surface s23 at an angle less than the critical angle. The intermediate layer 22 does not transmit but reflects electromagnetic waves propagating from the first propagation unit 17 and incident on the second intermediate surface s24 at an angle equal to or greater than the critical angle, and transmits electromagnetic waves propagating from the first propagation unit 17 and incident on the second intermediate surface s24 at an angle less than the critical angle.

The refractive index of the intermediate layer 22 may be smaller than the refractive index of the first prism 19 and the second prism 20. For example, the intermediate layer 22 contains a vacuum or at least one selected from the group consisting of a gas, a liquid, and a solid having a refractive index smaller than that of the second prism 20. Therefore, electromagnetic waves propagating inside the second prism 20 and incident on the second surface s2 at an angle equal to or greater than the critical angle are all reflected by the second surface s2. In the configuration where the angle of incidence of electromagnetic waves from the third direction d3 is equal to or greater than the critical angle, the second surface s2 reflects all electromagnetic waves propagating in the third direction d3 and allows the electromagnetic waves to propagate toward the second detector 28.

The blocking unit 25 partially blocks electromagnetic waves propagating toward the second propagation unit 18. The blocking unit 25 is disposed closer to the subject than the first image forming unit 15 is. The blocking unit 25 may be disposed in the first image forming unit 15. The blocking unit 25 partially blocks electromagnetic waves incident from the space where the object ob exists onto the second propagation unit 18. The blocking unit 25 blocks electromagnetic waves propagating from the first image forming unit 15 toward the second propagation unit 18 and incident on the first intermediate surface s23 at an angle equal to or greater than the critical angle. The blocking unit 25 blocks electromagnetic waves propagating from the sixth surface s6 in the third direction d3 and incident on the second intermediate surface s24 at an angle less than the critical angle. The blocking unit 25 includes an opening 26 that allows electromagnetic waves to pass therethrough. Electromagnetic waves passing through the opening 26 propagate toward the second propagation unit 18. The electromagnetic waves passing through the opening 26 are incident from the first image forming unit 15 onto the first intermediate surface s23 at an angle smaller than the critical angle, and are incident from the first propagation unit 17 onto the second intermediate surface s24 at an angle greater than the critical angle. The shape of the opening 26 will be described later below.

In the electromagnetic wave detector 11 according to the present embodiment, electromagnetic waves passing through the opening 26 propagate along predetermined paths after being separated by the separator 21. For example, electromagnetic waves passing through the opening 26 partially pass through the separator 21. In the present embodiment, the electromagnetic waves passing through the separator 21 include waves radiated by the radiator 12 and reflected from the object ob. The electromagnetic waves passing through the separator 21 are partially propagated by the first propagation unit 17 in the first selection direction ds1 and reflected by the second intermediate surface s24. The electromagnetic waves reflected by the second intermediate surface s24 are emitted from the seventh surface s7 and are incident on the second detector 28. In the absence of the blocking unit 25, however, the intermediate layer 22 reflects the electromagnetic waves passing through the separator 21 and incident on the intermediate surface s23 at an angle equal to or greater than the critical angle. Specifically, the electromagnetic waves propagating from the first image forming unit 15 and incident on the first intermediate surface s23 at an angle equal to or greater than the critical angle may be reflected off the intermediate layer 22, reflected off the fourth surface s4, emitted from the fifth surface s5, and incident on the first detector 27. The electromagnetic waves propagating from the first image forming unit 15 and incident on the first intermediate surface s23 at an angle equal to or greater than the critical angle may be reflected off the intermediate layer 22, emitted from the fifth surface s5 without being reflected off the fourth surface s4, and incident on the first detector 27. The electromagnetic waves propagating from the first image forming unit 15 and incident on the first intermediate surface s23 at an angle equal to or greater than the critical angle may be reflected off the intermediate layer 22, reflected off the fourth surface s4 and the first surface s1 multiple times, emitted from the fifth surface s5, and incident on the first detector 27. The electromagnetic waves propagating from the first image forming unit 15 and incident on the first intermediate surface s23 at an angle equal to or greater than the critical angle may be reflected off the intermediate layer 22, emitted from the fourth surface s4, and incident on the first image forming unit 15. In the absence of the blocking unit 25 that blocks the electromagnetic waves propagating from the first image forming unit 15 and incident on the first intermediate surface s23 at an angle equal to or greater than the critical angle, the electromagnetic waves transmitted or refracted by the separator 21 and propagating in the second direction d2 reflect off the first intermediate surface s23 and cause ghost or flare by being incident on the first detector 27 without propagating along a predetermined path. With the blocking unit 25 configured to block electromagnetic waves incident on the first intermediate surface s23 at an angle equal to or greater than the critical angle, the present embodiment can reduce the occurrence of ghost or flare in first detector 27.

In the present embodiment, the electromagnetic wave detector 11 is designed in such a way that electromagnetic waves passing through the intermediate layer 22 propagate along a predetermined path after being changed in direction of propagation by the first propagation unit 17. For example, electromagnetic waves passing through the intermediate layer 22 partially propagate in the first selection direction ds1 from the first propagation unit 17. The electromagnetic waves propagating in the first selection direction ds1 are incident again on the second prism 20 from the sixth surface s6, reflected off the second surface s2, emitted from the seventh surface s7, and are incident on the second detector 28. In the absence of the blocking unit 25, however, the electromagnetic waves propagating from the first propagation unit 17 and incident on the second intermediate surface s24 at an angle less than the critical angle of the intermediate layer 22 may propagate in the first selection direction ds1 from the first propagation unit 17 and be incident on the intermediate layer 22 without reflecting off the second intermediate surface s24. In the absence of the blocking unit 25 that blocks the electromagnetic waves incident on the second surface s2 at an angle less than the critical angle, the electromagnetic waves supposed to reflect off the second intermediate surface s24 and propagate toward the seventh surface s7 are incident on the intermediate layer 22 without propagating along a predetermined path and cause ghost or flare by being incident on the first detector 27. With the blocking unit 25 configured to block electromagnetic waves propagating from the first propagation unit 17 and incident on the second intermediate surface s24 at an angle less than the critical angle, the present embodiment can reduce the occurrence of ghost or flare in first detector 27.

The first detector 27 detects electromagnetic waves propagating from the separator 21 in the first direction d1. In the present embodiment, the electromagnetic waves propagating from the separator 21 in the first direction d1 are reflected off the fourth surface s4, emitted from the fifth surface s5, and detected by the first detector 27. To detect the electromagnetic waves emitted from the fifth surface s5, the first detector 27 may be disposed in the path of the electromagnetic waves emitted from the fifth surface s5. The first detector 27 may be disposed at or near the image formation position of electromagnetic waves incident from the first image forming unit 15 and propagating through the second propagation unit 18 including the separator 21. The first detector 27 may be disposed with the detection surface thereof parallel to the fifth surface s5.

In the present embodiment, the first detector 27 includes a passive sensor. In the present embodiment, the first detector 27 may include an image pickup device, such as an image sensor or an imaging array, which captures an image formed of electromagnetic waves on the detection surface to generate image information. In the present embodiment, the first detector 27 may capture an image of visible light. The first detector 27 may transmit the generated image information as a signal to the controller 14.

The first detector 27 may capture an image of, for example, infrared light, ultraviolet light, and radio waves other than visible light. The first detector 27 may include a depth sensor. With this configuration, the electromagnetic wave detector 11 can acquire distance information on the image from the first detector 27. The first detector 27 may include a thermosensor. With this configuration, the electromagnetic wave detector 11 may acquire temperature information on the image from the first detector 27. On the basis of the result of detection of electromagnetic waves, the first detector 27 may transmit information about the surroundings of the electromagnetic wave detector 11 to the controller 14. Examples of the information about the surroundings include image information, distance information, and temperature information. In the present embodiment, the first detector 27 transmits image information based on detected visible light to the controller 14.

The second detector 28 detects electromagnetic waves propagating from the first propagation unit 17 in the first selection direction ds1. In the present embodiment, the second detector 28 detects electromagnetic waves emitted from the seventh surface s7 and formed into an image by the second image forming unit 16. The second detector 28 may be disposed in the path of electromagnetic waves emitted from the seventh surface s7. The second detector 28 may be disposed at or near the image formation position of electromagnetic waves incident from the second image forming unit 16.

The second detector 28 may be disposed with the detection surface thereof parallel to the seventh surface s7. The detection surface of the second detector 28 may be parallel to the main surface of the second image forming unit 16.

In the present embodiment, the second detector 28 may be an active sensor that detects electromagnetic waves radiated from the radiator 12. In the present embodiment, the second detector 28 may detect electromagnetic waves reflected from the object ob after being radiated from the radiator 12 and reflected toward the object ob by the scanner 13.

In the present embodiment, the second detector 28 more specifically includes elements constituting a ranging sensor. For example, the second detector 28 includes single elements, such as an avalanche photodiode (APD), a photodiode (PD), a single photon avalanche diode (SPAD), a millimeter sensor, a submillimeter sensor, and a ranging image sensor. The second detector 28 may include element arrays, such as an APD array, a PD array, a multi photon pixel counter (MPPC), a ranging imaging array, and a ranging image sensor.

In the present embodiment, the second detector 28 transmits detection information to the controller 14, as a signal. The detection information indicates that reflected waves from the subject have been detected. The second detector 28 is more specifically an infrared sensor that detects electromagnetic waves in the infrared band.

The second detector 28 including single elements constituting a ranging sensor is simply required to be capable of detecting electromagnetic waves, and is not required to be capable of forming an image on the detection surface. Accordingly, the second detector 28 does not necessarily need to be disposed at or near the secondary image formation position which is the image formation position of the second image forming unit 16.

The second detector 28 may transmit, to the controller 14, information about the surroundings of the electromagnetic wave detector 11 on the basis of the result of the detection of electromagnetic waves made by the second detector 28. In the present embodiment, the controller 14 acquires, on the basis of the detection information from the second detector 28, distance information of the irradiation position of electromagnetic waves radiated from the radiator 12 using time-of-flight (ToF).

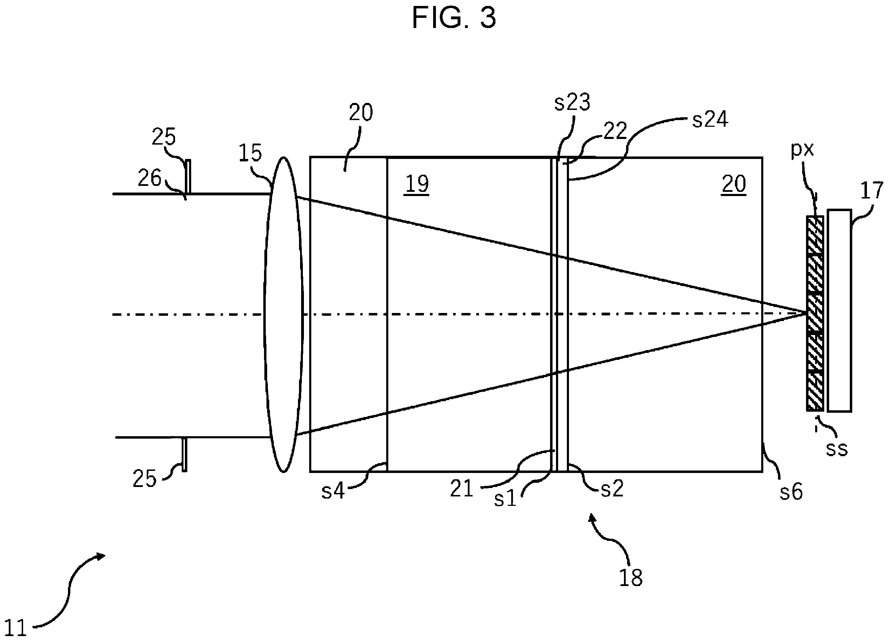

FIG. 3 is a diagram illustrating a part of the schematic configuration of the electromagnetic wave detector 11 according to the first embodiment of the present invention, as viewed from a direction different from that in FIG. 2. FIG. 3 illustrates the electromagnetic wave detector 11 as viewed from the upper side of FIG. 2. FIG. 3 is a drawing including the first image forming unit 15, the first propagation unit 17, the second propagation unit 18, and the blocking unit 25. In FIG. 3, the first prism 19, the separator 21, and the intermediate layer 22 overlap part of the second prism 20.

In the lateral view of the electromagnetic wave detector 11, as illustrated in FIG. 2, the intermediate layer 22 is inclined, with the upper part thereof closer to the first propagation unit 17 than the lower part thereof is. In other words, the intermediate layer 22 is not inclined in the depth direction in FIG. 2. In other words, the distance from the intermediate layer 22 to the first propagation unit 17 does not change in the up-down direction in FIG. 3. Accordingly, of electromagnetic waves incident from the opening 26, those incident on the upper part of the intermediate layer 22 in FIG. 2 and those incident on the lower part of the intermediate layer 22 in FIG. 2 are incident at different angles on the first intermediate surface s23 even when their angles with respect to the principal axis of the first image forming unit 15 are the same. Thus, in the absence of the blocking unit 25, the electromagnetic waves incident on the lower part of the intermediate layer 22 in FIG. 2 are more likely to be incident on the intermediate layer 22 at an angle equal to or greater than the critical angle, than the electromagnetic waves incident on the upper part of the intermediate layer 22 in FIG. 2. In other words, in the absence of the blocking unit 25, of electromagnetic waves incident on the electromagnetic wave detector 11, those incident on the upper part above the center of the intermediate layer 22 in FIG. 2 are more likely to be incident at an angle less than the critical angle, than those incident on the lower part of the intermediate layer 22 in FIG. 2. Therefore, in the electromagnetic waves incident on the electromagnetic wave detector 11 and propagating toward the intermediate layer 22, there is a difference, between the upper and lower parts of the intermediate layer 22, in the range of electromagnetic waves to be blocked by the blocking unit 25.

FIG. 3 is a top view of the electromagnetic wave detector 11 presented in FIG. 2. This means that the upper and lower parts of the intermediate layer 22 in FIG. 3 are along the depth direction of the intermediate layer 22 in FIG. 2. Therefore, in FIG. 3, the intermediate layer 22 is not inclined with respect to the principal axis of electromagnetic waves incident on the electromagnetic wave detector 11. In FIG. 2, on the other hand, the intermediate layer 22 is inclined with respect to the principal axis of electromagnetic waves incident on the electromagnetic wave detector 11. Thus, the width of the opening 26 along the up-down direction in FIG. 3 can be made longer than the height of the opening 26 along the depth direction in FIG. 3.

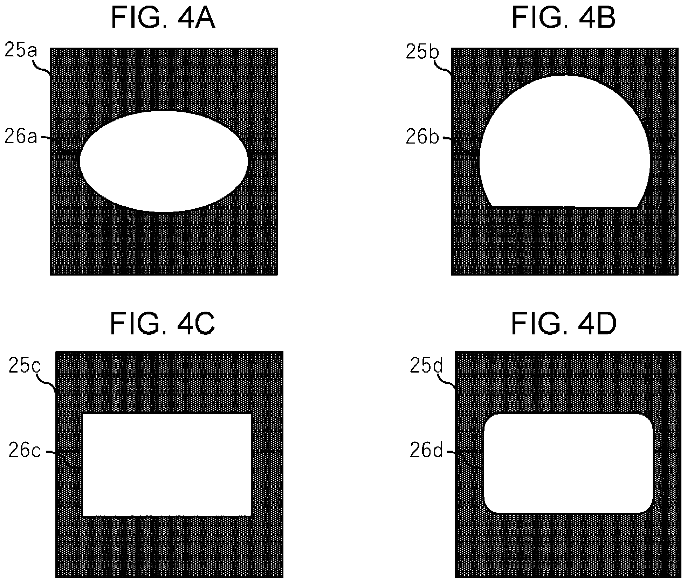

FIG. 4 is a diagram schematically illustrating shapes of the blocking unit 25 illustrated in FIG. 2. The opening 26 has a shape with a long side and a short side. The opening 26 is disposed in the blocking unit 25, with the long side along the depth direction in FIG. 2. In other words, the opening 26 is disposed in the blocking unit 25, with the long side along the up-down direction in FIG. 3. In other words, the up-down direction in FIG. 4 corresponds to the up-down direction in FIG. 2, and corresponds to the depth direction in FIG. 3. The opening 26 has a shape that does not allow incidence of electromagnetic waves propagating from the first image forming unit 15 and incident on the first intermediate surface s23 at an angle equal to or greater than the critical angle. The opening 26 has a shape that does not allow incidence of electromagnetic waves propagating from the sixth surface s6 in the third direction d3 and incident on the second intermediate surface s24 at an angle less than the critical angle.

The opening 26 may be substantially parallel to the fourth surface s4. In this case, the opening 26 is inclined with respect to the intermediate layer 22. In other words, when a point on the contour of the opening 26 is a first point (e.g., point on the contour of the opening 26 in the long side direction) and a point on the contour of the opening 26 whose distance from the center of gravity of the opening 26 is shorter than the distance from the center of gravity of the opening 26 to the first point is a second point (e.g., point on the contour of the opening 26 in the short side direction), an absolute difference between the distance from the center of gravity of the opening 26 to the intermediate layer 22 in the direction parallel to the optical axis of the first image forming unit 15 and the distance from the first point to the intermediate layer 22 in the direction parallel to the optical axis of the first image forming unit 15, may be smaller than an absolute difference between the distance from the center of gravity of the opening 26 to the intermediate layer 22 in the direction parallel to the optical axis of the first image forming unit 15 and the distance from the second point to the intermediate layer 22 in the direction parallel to the optical axis of the first image forming unit 15.

The opening 26 may have a shape with a long side passing through the first point and the center of gravity of the opening 26, and a short side passing through the second point and the center of gravity of the opening 26.

The opening 26 may have various shapes. FIG. 4A to FIG. 4D illustrate exemplary shapes of the opening 26. FIG. 4A illustrates an opening 26a having an elliptical shape. In the present embodiment, the opening 26 has the elliptical shape illustrated in FIG. 4A. FIG. 4B illustrates an opening 26b having a shape with an arc and a chord obtained by cutting off a part of a circle. When the opening 26b has the shape illustrated in FIG. 4B, the midpoint of the chord is disposed at a position closer to the intermediate layer 22 than the center of the arc is. The opening 26b having the shape illustrated in FIG. 4B allows more electromagnetic waves to pass therethrough than the opening 26a having the shape illustrated in FIG. 4A does. FIG. 4C illustrates an opening 26c having a rectangular shape. FIG. 4D illustrates an opening 26d having a rectangular shape with rounded corners. The shape of the opening 26 is not limited to those illustrated in FIGs. 4A to 4D. The opening 26 is simply required to be capable of blocking electromagnetic waves propagating from the first image forming unit 15 and incident on the first intermediate surface s23 at an angle equal to or greater than the critical angle, and electromagnetic waves propagating from the first propagation unit 17 and incident on the second intermediate surface s24 at an angle less than the critical angle.

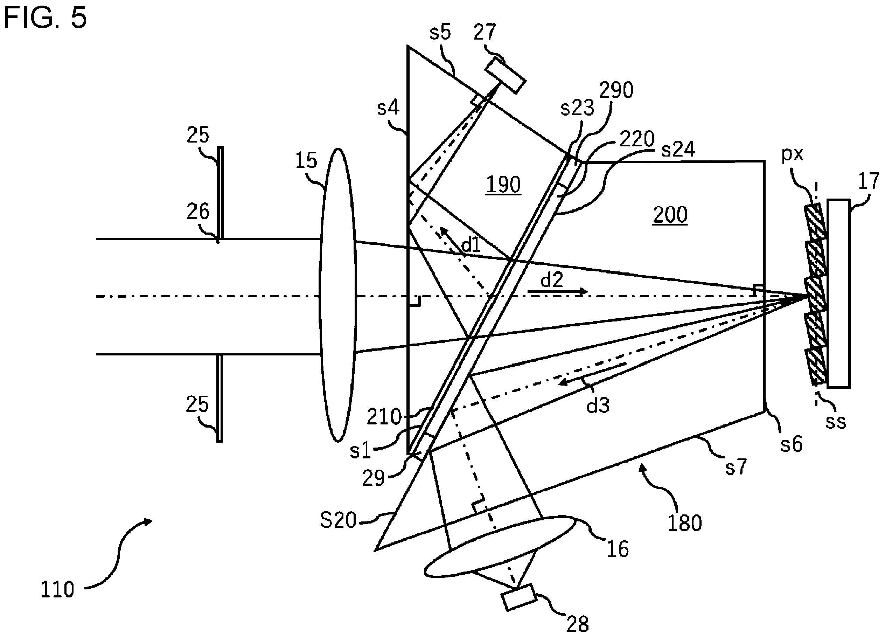

FIG. 5 is a diagram illustrating a schematic configuration of a variation of the electromagnetic wave detector 11 according to the first embodiment. In the present embodiment, an electromagnetic wave detector 110 includes the first image forming unit 15, the second image forming unit 16, the first propagation unit 17, a second propagation unit 180, the blocking unit 25, the first detector 27, and the second detector 28. The electromagnetic wave detector 110 differs from the electromagnetic wave detector 11 according to the first embodiment in that the second propagation unit 180 includes a spacer 290 as well as a first prism 190, a second prism 200, a separator 210, and an intermediate layer 220.

In the variation of the first embodiment, the configurations and effects of the electromagnetic wave detector 110, other than the spacer 290, will not be described, as they are the same as and/or similar to those of the electromagnetic wave detector 11 according to the first embodiment.

In the configuration where the intermediate layer 220 is a gas or a liquid, the spacer 290 is disposed on the outer edge of the separator 210 and a second surface s20 of the second prism 200 and filled with a gas or a liquid to form the intermediate layer 220. The intermediate layer 220 may include, for example, an air layer or a prism.

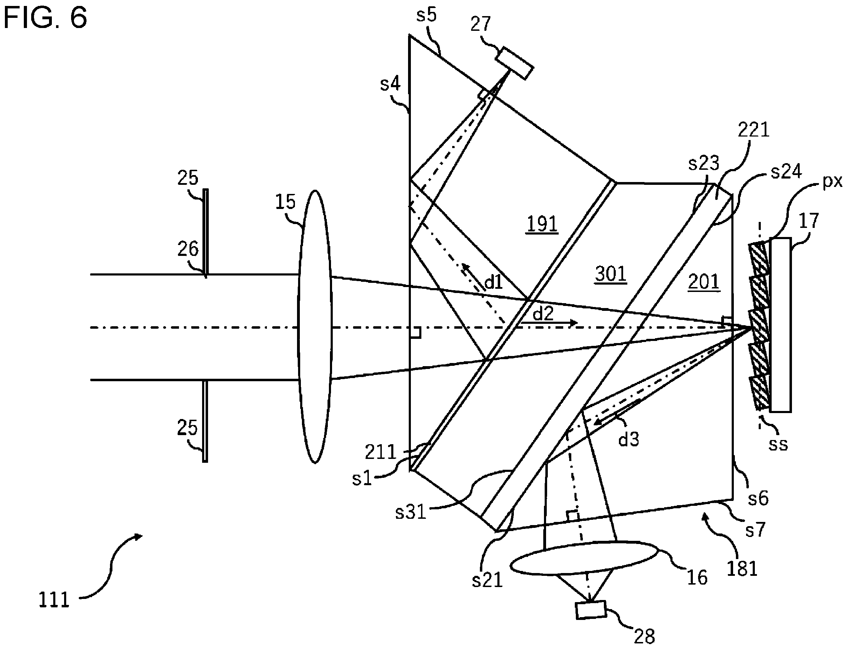

FIG. 6 is a diagram illustrating a schematic configuration of an electromagnetic wave detector 111 according to a second embodiment. The second embodiment differs from the first embodiment in the configuration of the second propagation unit 18. With reference to FIG. 6, the second embodiment will be described with a focus on differences from the first embodiment. Parts having the same configurations as those in the first embodiment will be denoted by the same reference numerals.

In the second embodiment, the electromagnetic wave detector 111 includes the first image forming unit 15, the second image forming unit 16, the first propagation unit 17, a second propagation unit 181, the blocking unit 25, the first detector 27, and the second detector 28.

The electromagnetic wave detector 111 differs from the electromagnetic wave detector 11 according to the first embodiment in that the second propagation unit 181 includes a third prism 301 as well as a first prism 191, a second prism 201, a separator 211, and an intermediate layer 221.

In the second embodiment, the configurations and functions of the electromagnetic wave detecting apparatus 10, other than the electromagnetic wave detector 111, are the same as those of the first embodiment. In the second embodiment, the configurations and functions, other than the second propagation unit 181, are the same as those of the first embodiment.

The third prism 301 may be disposed between the separator 211 and the intermediate layer 221. The third prism 301 may be a plate-like member. One plate surface of the third prism 301 may be in contact with the separator 211. The other plate surface of the third prism 301 may be in contact with the first intermediate surface s23 of the intermediate layer 221. The third prism 301 may be a prism having surfaces inclined with respect to each other, or a triangular prism.

Unlike in the first embodiment, the separator 211 is disposed between the first prism 191 and the third prism 301. One surface of the separator 211 may be in contact with the first surface s1 of the first prism 191, and the other surface of the separator 211 may be in contact with the third prism 301.

The intermediate layer 221 may be disposed between the second prism 201 and the third prism 301. As in the first embodiment, the intermediate layer 221 may be in contact with a second surface s21 of the second prism 201. The intermediate layer 221 may be in contact with a third surface s3 of the third prism 301 opposite the plate surface of the third prism 301 in contact with the separator 211.

The present invention has been explained on the basis of various drawings and examples. It is to be noted that a person skilled in the art can readily make variations of and alterations to the present disclosure. Accordingly, it is to be noted that such variations and alterations fall within the scope of the present disclosure.

The embodiments disclosed herein are implemented, for example, in hardware, software, firmware, middleware, microcode, or combination of any of those. Instructions may be program code or code segments for executing necessary tasks. The instructions may be stored in a machine-readable non-transitory storage medium or other media. A code segment may represent a procedure, a function, a subprogram, a program, a routine, a subroutine, a module, a software package, a class, or any combination of instructions, data structures, or program statements. A code segment may be connected to another code segment or a hardware circuit by transmitting and/or receiving information, data arguments, variables, or memory contents.

The system disclosed herein includes various modules and/or units for executing specific functions. It is to be noted that these modules and units are schematically illustrated to simplify the explanation of their functionality and do not necessarily represent specific hardware and/or software. In that sense, these module, units, and other components are simply required to be hardware and/or software implemented to virtually execute the specific functions described herein. Various functions of different components may be implemented as hardware and/or software combined or separated in any manner, and may be used separately or in combination. Input/output or I/O devices including, but not limited to, a key board, a display, a touch screen, and a pointing device, or a user interface may be connected to the system directly or via an I/O controller. As described above, various aspects of the present disclosure may be implemented by various embodiments, which are all included in the scope of the present disclosure.

### REFERENCE SIGNS

10 electromagnetic wave detecting apparatus
11, 110, 111 electromagnetic wave detector
12 radiator
13 scanner
14 controller
15 first image forming unit
16 second image forming unit
17 first propagation unit
18, 180, 181 second propagation unit
19, 190, 191 first prism
20, 200, 201 second prism
21, 210, 211 separator
22, 220, 221 intermediate layer
s23 first intermediate surface
s24 second intermediate surface
25, 25a, 25b, 25c, 25d blocking unit
26, 26a, 26b, 26c, 26d opening
27 first detector
28 second detector
290 spacer
301 third prism
d1, d2, d3 first direction, second direction, third direction
ds1, ds2 first selection direction, second selection direction
ob object
px pixel
s1, s3, s4, s5, s6, s7 first surface, third surface, fourth surface, fifth surface, sixth surface, seventh surface
s2, s20, s21, s22 second surface
ss reference plane

## Claims

1. An electromagnetic wave detecting apparatus comprising:
a radiator configured to radiate electromagnetic waves into space where an object exists;
a first optical element having a first surface configured to separate incident electromagnetic waves into a first part propagating in a first direction and a second part propagating in a second direction;
an intermediate layer configured not to allow passage of electromagnetic waves of the second part incident at an angle equal to or greater than a first critical angle, and configured to allow passage of electromagnetic waves of the second part incident at an angle smaller than the first critical angle; and
a blocking unit comprising an opening allowing electromagnetic waves to pass therethrough, the blocking unit being configured to partially block incident electromagnetic waves,
wherein the blocking unit blocks electromagnetic waves incident on a first intermediate surface at angle equal to or greater than the first critical angle.

2. The electromagnetic wave detecting apparatus according to claim 1, further comprising:
a first propagation unit comprising a plurality of pixels arranged therein, the first propagation unit being configured to propagate the second part incident on the pixels in a first selection direction or a second selection direction different from the first selection direction, with respect to each of the pixels; and
a second optical element having a second surface configured to allow propagation of electromagnetic waves propagating in the first selection direction,
wherein the intermediate layer reflects electromagnetic waves propagating in the first selection direction and incident at an angle equal to or greater than a second critical angle, and does not reflect electromagnetic waves propagating in the first selection direction and incident at an angle smaller than the second critical angle; and
the blocking unit blocks electromagnetic waves incident on a second intermediate surface at an angle smaller than the second critical angle.

3. The electromagnetic wave detecting apparatus according to claim 1 or 2, wherein
the intermediate layer is inclined with respect to a direction of incidence of electromagnetic waves incident from the space; and
when a first point and a second point are points on a contour of the opening and the second point is a point whose distance from a center of gravity of the opening is shorter than a distance from the center of gravity to the first point, a change in distance between the intermediate layer and the opening in a direction from the center of gravity to the first point is smaller than a change in distance between the intermediate layer and the opening in a direction from the center of gravity to the second point.

4. The electromagnetic wave detecting apparatus according to claim 2, wherein the intermediate layer is inclined with respect to a plane of the first propagation unit in which the pixels are arranged.

5. The electromagnetic wave detecting apparatus according to claim 3, wherein the opening has a shape with a major axis and a minor axis shorter than the major axis.

6. The electromagnetic wave detecting apparatus according to claim 3, wherein the opening has a shape with an arc and a chord obtained by cutting off a part of a circle; and
a midpoint of the chord is at a position closer to the intermediate layer than a center of the arc is.

7. The electromagnetic wave detecting apparatus according to claim 2, wherein
the first optical element further has a fourth surface and a fifth surface; and
the second optical element further has a sixth surface and a seventh surface,
the electromagnetic wave detecting apparatus further comprising:
a first detector configured to detect electromagnetic waves emitted from the fifth surface; and
a second detector configured to detect electromagnetic waves emitted from the seventh surface,
wherein the fourth surface allows electromagnetic waves incident from the opening to propagate toward the first surface and allows electromagnetic waves propagating from the first surface to propagate toward the fifth surface; and
the sixth surface emits the second part toward the pixels and allows electromagnetic waves incident again from the pixels to propagate toward the second surface.

8. The electromagnetic wave detecting apparatus according to claim 7, further comprising a controller configured to acquire an image based on a result of detection made by the first detector, and measure a distance to the object based on a result of detection made by the second detector.

9. The electromagnetic wave detecting apparatus according to claim 2, wherein the intermediate layer reflects electromagnetic waves of the second part incident at an angle equal to or greater than the first critical angle, allows passage of electromagnetic waves of the second part incident at an angle smaller than the first critical angle, reflects electromagnetic waves propagating in the first selection direction and incident at an angle equal to or greater than the second critical angle, and allows passage of electromagnetic waves propagating in the first selection direction and incident at an angle smaller than the second critical angle.

10. The electromagnetic wave detecting apparatus according to claim 2, wherein the intermediate layer is disposed between the first optical element having the first surface and the second optical element having the second surface;
the first intermediate surface is constituted by the first surface; and
the second intermediate surface is constituted by the second surface.

11. The electromagnetic wave detecting apparatus according to claim 2, wherein the intermediate layer is disposed between the first optical element having the first surface and the second optical element having the second surface,
the electromagnetic wave detecting apparatus further comprising a third optical element disposed between the intermediate layer and the first optical element and having a third surface,
wherein the first intermediate surface is constituted by the third surface; and
the second intermediate surface is constituted by the second surface.
